# EUROPÄISCHE PATENTSCHRIFT

(11) **EP 2 331 916 B1**
(45) Veröffentlichungstag und Bekanntmachung des Hinweises auf die Patenterteilung: **18.10.2017**
(21) Anmeldenummer: 09782000.5
(22) Anmeldetag: 19.08.2009
(51) Int. Cl.: G01F 23/284, H01Q 13/00

(54) **MIT MIKROWELLEN ARBEITENDES FÜLLSTANDSMESSGERÄT**
FILL LEVEL MEASURING DEVICE OPERATING BY WAY OF MICROWAVE WAVES
APPAREIL DE MESURE DE NIVEAU DE REMPLISSAGE À HYPERFRÉQUENCE

(30) Priorität: 23.09.2008 DE 102008048582
(43) Veröffentlichungstag der Anmeldung: 15.06.2011
(73) Patentinhaber: Endress+Hauser GmbH+Co. KG, 79689 Maulburg (DE)
(72) Erfinder: MAYER, Winfried, 89290 Buch (DE)
(74) Vertreter: Andres, Angelika Maria
(86) Internationale Anmeldenummer: PCT/EP2009/060731
(87) Internationale Veröffentlichungsnummer: WO 2010/034574

(56) Entgegenhaltungen:
- US-A- 4 258 366
- US-A- 4 962 384
- US-A1- 2004 080 324

## Beschreibung

Die Erfindung betrifft ein nach dem Laufzeitprinzip arbeitendes Füllstandsmessgerät zur Messung eines Füllstandes eines Füllgutes in einem Behälter, das im Messbetrieb mittels einer Antenne Mikrowellen sendet und deren an der Füllgutoberfläche reflektierten Echos nach einer vom zu messenden Füllstand abhängigen Laufzeit wieder empfängt und anhand von deren Laufzeit den Füllstand bestimmt.

Derartige berührungslos arbeitende Messgeräte werden in einer Vielzahl von Industriezweigen eingesetzt, z.B. in der verarbeitenden Industrie, in der Chemie oder in der Lebensmittelindustrie.

Typischer Weise wird das Füllstandsmessgerät oberhalb des Füllguts montiert und dessen Antenne auf das Füllgut ausgerichtet.

Zur Bestimmung der Laufzeiten können alle bekannten Verfahren angewendet werden, die es ermöglichen, verhältnismäßig kurze Entfernungen mittels reflektierter Mikrowellen zu messen. Die bekanntesten Beispiele sind das Pulsradar und das Frequenzmodulations-Dauerstrichradar (FMCW-Radar).

Beim Pulsradar werden periodisch kurze Mikrowellen-Sendeimpulse, im folgenden als Wellenpakete bezeichnet, gesendet, die von der Füllgutoberfläche reflektiert und nach einer abstandsabhängigen Laufzeit wieder empfangen werden. Es wird anhand des empfangenen Signals eine Echofunktion abgeleitet, die die empfangene Signalamplitude als Funktion der Zeit wiedergibt. Jeder Wert dieser Echofunktion entspricht der Amplitude eines in einem bestimmten Abstand von der Antenne reflektierten Echos.

Beim FMCW-Verfahren wird kontinuierlich ein Mikrowellensignal gesendet, das periodisch linear frequenzmoduliert ist, beispielsweise nach einer Sägezahnfunktion. Die Frequenz des empfangenen Echosignals weist daher gegenüber der Augenblicksfrequenz, die das Sendesignal zum Zeitpunkt des Empfangs hat, eine Frequenzdifferenz auf, die von der Laufzeit des Mikrowellensignals und dessen Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der reflektierenden Fläche von der Antenne. Ferner entsprechen die Amplituden der Spektrallinien des durch Fouriertransformation gewonnenen Frequenzspektrums den Echoamplituden. Dieses Fourierspektrum stellt daher in diesem Fall die Echofunktion dar.

Aus der Echofunktion wird mindestens ein Nutzecho bestimmt, das der Reflexion des Sendesignals an der Füllgutoberfläche entspricht. Aus der Laufzeit des Nutzechos ergibt sich bei einer bekannten Ausbreitungsgeschwindigkeit der Mikrowellen unmittelbar die Wegstrecke die die Mikrowellen auf ihrem Weg vom Messgerät zur Füllgutoberfläche und zurück durchlaufen. Anhand der Einbauhöhe des Füllstandsmessgeräts über dem Behälter lässt sich hieraus unmittelbar der gesuchte Füllstand berechnen.

Heutige Füllstandsmessgeräte weisen in der Regel eine für eine vorgegebene Frequenz oder ein vorgegebenes enges Frequenzband ausgelegte Antenne auf.

In der Veröffentlichungsschrift US 2004/080324 A1 ist wird ein Multiband-Füllstandsmessgerät beschrieben, das zwecks Trennschichterkennung zwei Messsignale mit unterschiedlichen Frequenzen über ein Patch-Antennenarray in eine Steghom-Antenne einkoppelt.

Ein weiteres Füllstandsmessgerät, mit dem ebenfalls eine Trennschichterkennung durchgeführt werden kann, ist in der US-Patentschrift 4,962,384 gezeigt. Das dort gezeigte Füllstandsmessgerät ist zur Trennschichterkennung mit einer konischen Antenne und einer weiteren, zylindrischen Antenne ausgestattet.

Es gibt jedoch eine Vielzahl von Anwendungen, bei denen es vorteilhaft ist, Füllstandsmessungen mit deutlich unterschiedlichen Frequenzen auszuführen. Um dies zu ermöglichen werden hierzu in der Regel zwei separate jeweils für eine Frequenz bzw. ein vorgegebenes Frequenzband ausgelegte Füllstandsmessgeräte oder zumindest zwei separate jeweils für eine Frequenz bzw. ein vorgegebenes Frequenzband ausgelegte Antennen eingesetzt.
In modernen Industrieanlagen wird in den einzelnen Behältern in der Regel eine Vielzahl unterschiedlicher Messungen ausgeführt. Hierzu ist eine große Anzahl unterschiedlicher Messgeräte auf, am oder in dem jeweiligen Behälter anzubringen. Hierfür ist jedoch nur eine begrenzte Anzahl von entsprechenden Behälteröffnungen und/oder Montagevorrichtungen vorhanden. Dementsprechend ist es häufig nicht möglich oder nicht wünschenswert zwei oder mehr Füllstandsmessgeräte bzw. zwei oder mehr Antennen auf einem einzigen Behälter für die Füllstandsmessung vorzusehen.

Eine multifrequenz-fähige Hom-Antenne für Radar-Anwendungen allgemein ist in der Patentschrift US 4,258,366 gezeigt. Zur Einkopplung der verschiedenen Frequenzen ist hierzu an das Horn ein Multiplexer mit entsprechend ausgestalteten Wellenleitern angeordnet. Hierdurch wird ein polarisiertes Abstrahlverhalten erreicht.

Es ist eine Aufgabe der Erfindung ein mit Mikrowellen nach dem Laufzeitprinzip arbeitendes Füllstandsmessgerät anzugeben, mit dem mit einer einzigen Antenne Messungen bei zwei deutlich verschiedenen Frequenzen ausführbar sind.

Hierzu besteht die Erfindung in einem mit Mikrowellen nach dem Laufzeitprinzip arbeitenden Füllstandsmessgerät zur Messung eines Füllstandes eines Füllgutes in einem Behälter, mit
- einer Sende- und Empfangseinrichtung,
   -- zur Erzeugung von einem hochfrequenteren Mikrowellensignal und einem deutlich niedrigere Frequenzen aufweisenden niederfrequenteren Mikrowellensignal,
   -- zum gleichzeitigen oder zum sukzessiven Senden dieser Mikrowellensignale in den Behälter in Richtung des Füllguts, und
   -- zum Empfangen von im Behälter zur Sende- und Empfangseinrichtung zurück reflektierten Echosignalen der Mikrowellensignale,
   -- die eine einzige Antenne aufweist,
      --- die ein innen trichterförmiges Horn und zwei miteinander verbundene an das Horn angeschlossene Hohlleitersegmente aufweist,
      --- die einen Koaxialleiteranschluss aufweist, der an das unmittelbar an das Horn angrenzende Hohlleitersegment angeschlossenen ist, über den die Antenne mit dem niederfrequenteren Mikrowellensignal gespeist wird, und über den das zugehörige niederfrequentere Echosignal empfangen wird, und
   -- die einen Hohlleiteranschluss aufweist, der an dasjenige der beiden Hohlleitersegmente angeschlossen ist, das auf einer vom Horn abgewandten Seite des an das Horn angrenzenden Hohlleitersegments angeordneten ist, und über den die Antenne mit dem höherfrequenteren Mikrowellensignal gespeist wird, und über den das zugehörige höherfrequentere Echosignal empfangen wird,
      --- wobei das Hohlleitersegment einen Durchmesser aufweist, der an die im niederfrequenteren Mikrowellensignal enthaltenen Frequenzen und an die Frequenzen des höherfrequenteren Mikrowellensignals, die ein Vielfaches dieser Frequenzen sind, angepasst ist, wodurch beide Mikrowellensignale und beide Echosignale ausbreitungsfähig sind wodurch bei zeitgleichem Senden beider Mikrowellensignale der Empfang der beiden zugehörigen Echosignale über den Koaxialleiteranschluss vorgesehen ist.

Gemäß einer bevorzugten Ausgestaltung
- weist das mit dem Hohlleiteranschluss versehene Hohlleitersegment einen Durchmesser auf, der an die im höherfrequenteren Mikrowellensignal enthaltenen Frequenzen angepasst ist.

Gemäß einer Weiterbildung
- weist der Koaxialleiteranschluss eine in das Hohlleitersegment hinein ragende Einkopplung auf,
- liegt ein Abstand zwischen der Einkopplung und einem Übergang zwischen den beiden Hohlleitersegmenten entlang einer gemeinsamen Längsachse der beiden Hohlleitersegmente in der Größenordnung von einem Viertel der Wellenlänge einer Grundmode des niederfrequenteren Mikrowellensignals bei dessen Mittenfrequenz, und
- weist die Einkopplung eine Länge auf, die in der Größenordnung von einem Viertel der Wellenlänge der Grundmode des niederfrequenteren Mikrowellensignals bei dessen Mittenfrequenz im freien Raum liegt.

Gemäß einer Weiterbildung ist zwischen den beiden Hohlleitersegmenten ein Übergangselement angeordnet.

Gemäß einer bevorzugten Ausgestaltung weist das Übergangselement einen Durchmesser auf, bei dem eine Feldwellenimpedanz des Übergangselements für eine Grundmode des hochfrequenteren Mikrowellensignals gleich einer Wurzel aus einem Produkt der Feldwellenimpedanzen der beiden Hohlleitersegmente für die Grundmode des hochfrequenteren Mikrowellensignals ist.

Gemäß einer weiteren Ausgestaltung weist das Übergangselement eine Länge auf, die in der Größenordnung von einem Viertel der Wellenlänge einer Grundmode des hochfrequenteren Mikrowellensignals bei dessen Mittenfrequenz liegt.

Gemäß einer Weiterbildung weist der Koaxialleiteranschluss eine in das Hohlleitersegment hinein ragende Einkopplung auf, die senkrecht zu einer Polarisation einer Grundmode des hochfrequenteren Mikrowellensignals verläuft.

Gemäß einer weiteren Weiterbildung ist das Übergangselement als Durchführung, insb. als Glasdurchführung, ausgebildet.

Gemäß einer Weiterbildung weist das mit dem Hohlleiteranschluss versehene Hohlleitersegment eine Cut_{off} Frequenz auf, die größer als die im niederfrequenteren Mikrowellensignal enthaltenen Frequenzen ist.

Gemäß einer weiteren Weiterbildung weist das Füllstandsmessgerät
- einen einzigen Mikrowellengenerator auf, der ein Ausgangssignal erzeugt, aus dem die beiden Mikrowellensignale in separaten dem Mikrowellengenerator nachgeschalteten Schaltungsmodulen erzeugt und der Antenne zugeführt werden, und
- es weist eine einzige Signalverarbeitung auf,
   -- der ein anhand des hochfrequenteren Echosignals abgeleitetes erstes Messsignal und ein anhand des niederfrequenten Echosignals abgeleitetes zweites Messsignal getrennt zugeführt werden, und die anhand der beiden Messsignale den Füllstand bestimmt.

Gemäß einer weiteren Weiterbildung
- weist jedes Schaltungsmodul einen Frequenzvervielfacher, eine Sende-Empfangsweiche und einen Mischer auf,
- ist jeder Frequenzvervielfacher an den Mikrowellengenerator angeschlossen und dient dazu aus dem Ausgangssignal des Mikrowellengenerators durch Frequenzvervielfachung um einen ganzzahligen modul-spezifischen Vervielfachungsfaktor das jeweilige Mikrowollensignal zu erzeugen,
- ist jeder Frequenzvervielfacher über die Sende- Empfangsweiche an die Antenne und parallel dazu an einen ersten Eingang des jeweiligen Mischers angeschlossen,
- ist die Antenne über die jeweilige Sende- und Empfangsweiche an einen zweiten Eingang des jeweiligen Mischers angeschlossen, und
- ist jedem der Mischer ein Filter nachgeschaltet, das dazu dient aus einem durch Mischung des am ersten Eingang des jeweiligen Mischers anliegenden Mikrowellensignals und des am zweiten Eingang des jeweiligen Mischers anliegenden Echosignals erzeugten Mischsignal ein Messsignal herauszufiltern, dessen Frequenzen den Differenzen der Frequenzen des jeweiligen Mikrowellensignals und des zugehörigen Echosignals entsprechen.

Gemäß einer Weiterbildung ist in den Strahlengang der Antenne mindestens eine Linse oder ein Reflektor eingesetzt.

Weiter umfasst die Erfindung ein Verfahren zur Messung eines Füllstandes eines homogenen Füllguts in einem Behälter mit einem erfindungsgemäßen Füllstandsmessgerät, bei dem
- anhand des hochfrequenteren und des niederfrequenteren Echosignals jeweils eine Echofunktion abgeleitet wird, die die jeweilige Echoamplitude als Funktion einer von der zugehörigen Signallaufzeit abhängigen Größe wiedergibt,
- für jede Echofunktion ein auf eine Reflektion an der Füllgutoberfläche zurück zu führendes Maximum der jeweiligen Echofunktion bestimmt wird,
- anhand der Lage der beiden Maxima überprüft wird, ob die beiden Maxima auf eine Reflektion an derselben Füllgutoberfläche zurück zu führen sind, und
- der Füllstand anhand der Lage des Maximums derjenigen Echofunktion bestimmt wird, dass die größere Amplitude aufweist, wenn die beiden Maxima auf eine Reflektion an derselben Füllgutoberfläche zurück zu führen sind.

Ebenso umfasst die Erfindung ein Verfahren zur Messung eines Füllstandes eines zur Schichtbildung neigenden Füllguts in einem Behälter mit einem erfindungsgemäßen Füllstandsmessgerät, bei dem
- anhand des hochfrequenteren und des niederfrequenteren Echosignals jeweils eine Echofunktion abgleitet wird, die die jeweilige Echoamplitude als Funktion einer von der zugehörigen Signallaufzeit abhängigen Größe wiedergibt,
- ein auf eine Reflektion an einer Füllgutoberfläche zurück zu führendes absolutes Maximum jeder Echofunktion bestimmt wird,
- anhand der Lage der beiden absoluten Maxima festgestellt wird, ob sie auf eine Reflektion der beiden Mikrowellensignale an ein und derselben Füllgutoberfläche im Behälter zurückzuführen sind, oder ob das absolute Maximum der mit dem hochfrequenteren Mikrowellensignal abgeleiteten Echofunktion auf eine Reflektion an einer Füllgutoberfläche einer oberen eine geringere Dichte aufweisenden Füllgutschicht zurückzuführen ist, und das absolute Maximum der mit dem niederfrequenteren Mikrowellensignal abgeleiteten Echofunktion auf eine Reflektion an einer Füllgutoberfläche einer unteren eine größere Dichte aufweisenden Füllgutschicht zurückzuführen ist.

Weiter umfasst die Erfindung eine Weiterbildung des letztgenannten Verfahrens, bei dem
- der Füllstand anhand der Lage des die größere Amplitude aufweisenden Maximums bestimmt wird, wenn anhand der Lage der beiden absoluten Maxima festgestellt wurde, dass die beiden absoluten Maxima auf eine Reflektion der beiden Mikroweilensignale an ein und derselben Füllgutoberfläche im Behälter zurückzuführen sind, und
- die Lage der Füllgutoberfläche der oberen Füllgutschicht anhand der Lage des absoluten Maximums der mit dem hochfrequenteren Mikrowellensignal abgeleiteten Echofunktion bestimmt wird, wenn festgestellt wurde, dass das absolute Maximum der mit dem hochfrequenteren Mikrowellensignal abgeleiteten Echofunktion auf eine Reflektion an einer Füllgutoberfläche der oberen Füllgutschicht zurückzuführen ist.

Mit dem erfindungsgemäßen Füllstandsmessgerät ist es damit möglich mit einem nur eine einzige Antenne aufweisenden Füllstandsmessgerät Messungen bei deutlich verschiedenen Frequenzen auszuführen. Dies ist insb. in Anwendungen von Vorteil, bei denen auf dem Behälter nur wenig Vorrichtungen zur Befestigung einer Antenne bzw. eines Messgeräts vorgesehen sind.

Ein weiterer Vorteil des erfindungsgemäßen Messgeräts besteht darin, dass es aufgrund seines modularen Aufbaus sehr kostengünstig herstellbar ist. Die teueren Komponenten wie die Antenne, der Mikrowellengenerator und die Signalverarbeitung sind nur einmal vorzusehen. Die unterschiedlichen Frequenzen werden durch die im Vergleich hierzu sehr kostengünstigen in zweifacher Ausführung vorgesehenen Schaltungsmodule erzeugt.

Die Erfindung und deren Vorteile werden nun anhand der Figuren der Zeichnung, in denen ein Ausführungsbeispiel dargestellt ist, näher erläutert; gleiche Teile sind in den Figuren mit gleichen Bezugszeichen versehen.
- Fig. 1 zeigt:: eine Prinzipskizze eines auf einem Behälter angeordneten erfindungsgemäßen Füllstandsmessgeräts;
- Fig. 2 zeigt: die Antenne des Füllstandsmessgeräts von Fig. 1;
- Fig. 3 zeigt: die in der Messsituation von Fig. 1 mit dem hochfrequenteren Mikrowellensignal abgeleitete Echofunktion;
- Fig. 4 zeigt: die in der Messsituation von Fig. 1 mit dem niederfrequenteren Mikrowellensignal abgeleitete Echofunktion
- Fig. 5 zeigt: eine Anwendung, bei der das erfindungsgemäße Füllstandsmessgerät auf einem Behälter angeordnet ist, in dem sich eine untere Füllgutschicht befindet, auf der sich eine obere Füllgutschicht mit geringerer Dichte ausgebildet hat;
- Fig. 6 zeigt: ein Beispiel einer in der in Fig. 5 dargestellten Messsituation mit dem höherfrequenteren Mikrowellensignal abgeleiteten Echofunktion;
- Fig. 7 zeigt: ein Beispiel einer in der in Fig. 5 dargestellten Messsituation mit dem niederfrequenteren Mikrowellensignal abgeleiteten Echofunktion;
- Fig. 8 zeigt: eine Ausführungsform, bei der in den Strahlengang der Antenne eine Linse eingesetzt ist; und
- Fig. 9 zeigt: eine Ausführungsform, bei der in den Strahlengang der Antenne ein Reflektor eingesetzt ist.

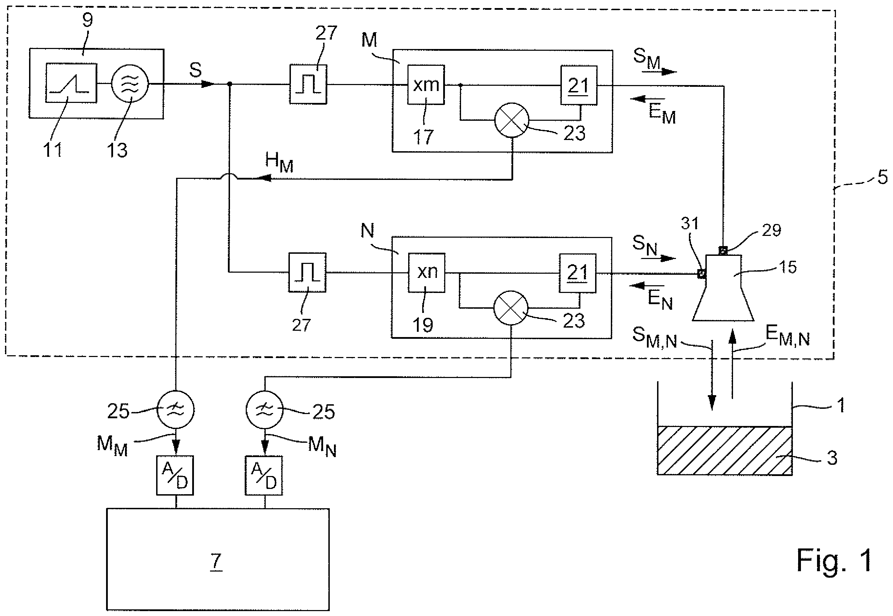

Fig. 1 zeigt eine Prinzipskizze eines auf einem Behälter 1 oberhalb eines im Behälter 1 befindlichen Füllguts 3 angeordneten erfindungsgemäßen nach dem Laufzeitprinzip arbeitenden Füllstandsmessgeräts. Bei dem in Fig. 1 dargestellten Messgerät handelt es sich um ein FMCW Radar Füllstandsmessgerät. Die Erfindung ist jedoch in analoger Weise auch in Puls Radar Füllstandsmessgeräten einsetzbar.

Das Messgerät weist eine vorzugsweise modular aufgebaute Sende- und Empfangseinrichtung 5 und eine daran angeschlossene Signalverarbeitung 7 auf. Die Sende- und Empfangseinrichtung 5 dient zur Erzeugung von zwei deutlich verschiedene Frequenzen fₘ, fₙ aufweisenden Mikrowellensignalen S_{M}, S_{N}, zum gleichzeitigen oder zum sukzessiven Senden dieser Mikrowellensignale S_{M}, S_{N} in den Behälter 1 in Richtung des Füllguts 3, und zum Empfangen von im Behälter 1 zur Sende- und Empfangseinrichtung 5 zurück reflektierten Echosignalen E_{M}, E_{N} der verschiedenen Mikrowellensignale S_{M}, S_{N}.

Hierzu weist die Sende- und Empfangseinrichtung 5 vorzugsweise einen einzigen Mikrowellengenerator 9 auf, der ein Ausgangssignal S generiert, aus dem die beiden Mikrowellensignale S_{M}, S_{N} erzeugt werden. In dem dargestellten Ausführungsbeispiel eines FMCW Radar Füllstandsmessgeräts ist dies ein FMCW Rampengenerator 11 mit einem nachgeschalteten Filter 13, der ein periodisch linear, beispielsweise nach einer Sägezahnfunktion, frequenzmoduliertes Ausgangssignal S liefert. Die Frequenzen f des Ausgangssignals S liegen in einem vorgegebenen nach oben und unten eng begrenzten Frequenzband und variieren zeitlich um eine vorgegebene Mittenfrequenz F des Frequenzbandes.

Bei einem Puls Radar Füllstandsmessgerät tritt an die Stelle des FMCW Rampengenerators 11 ein Pulsgenerator. Das Ausgangssignal S sind in diesem Fall kurze periodisch ausgegebene Mikrowellenpulse einer vorgegebenen Frequenz f.

Weiter weist die Sende- und Empfangseinrichtung 5 für jedes der Mikrowellensignale S_{M}, S_{N} jeweils ein eigenes Schaltungsmodul M, N, und eine einzige an alle Schaltungsmodule M, N angeschlossene Antenne 15 auf. Jedes Schaltungsmodul M, N umfasst jeweils einen Frequenzvervielfacher 17, 19 eine Sende- Empfangsweiche 21 und einen Mischer 23. Die Frequenzvervielfacher 17, 19 werden über den Mikrowellengenerator 9 parallel zueinander mit dessen Ausgangssignal S gespeist, und vervielfachen die darin enthaltenen Frequenzen f um einen modul-spezifischen ganzzahligen Vervielfachungsfaktor m, n. Sie erzeugen jeweils ein Mikrowellensignal S_{M}, S_{N} dessen Frequenzen ein modul-spezifisches ganzzahliges Vielfaches m, n der Frequenzen des Ausgangssignals S sind. Jedes Schaltungsmodul M, N weist einen anderen Vervielfachungsfaktor m, n auf. Dementsprechend weisen die einzelnen in den unterschiedlichen Modulen M, N erzeugten Mikrowellensignale S_{M}, S_{N} deutlich voneinander verschiedene Frequenzen fₘ, fₙ auf. Das Schaltungsmodul M mit dem Frequenzvervielfacher 17 mit dem höheren Vervielfachungsfaktor m generiert dementsprechend aus dem Ausgangssignal S ein höhere Frequenzen fₘ aufweisendes nachfolgend als hochfrequenteres Mikrowellensignal S_{M} bezeichnetes Mikrowellensignal S_{M}. Das Schaltungsmodul N mit dem Frequenzvervielfacher 19 mit dem niedrigeren Vervielfachungsfaktor n generiert aus dem Ausgangssignal S ein niedrigere Frequenzen fₙ aufweisendes nachfolgend als niederfrequenteres Mikrowellensignal S_{N} bezeichnetes Mikrowellensignal S_{N}.

Erfindungsgemäß sind die Frequenzen fₘ, fₙ der verschiedenen Mikrowellensignale S_{M}, S_{N} deutlich voneinander verschieden. In dem dargestellten Ausführungsbeispiel mit zwei verschiedenen Mikrowellensignalen S_{M}, S_{N} liegt die Mittenfrequenz F des hochfrequenteren Mikrowellensignals S_{M} beispielsweise bei 78 GHz, und die Mittenfrequenz F des niederfrequenteren Mikrowellensignals S_{N} liegt bei 26 GHz. Bei einem Ausgangssignal S mit einer Mittenfrequenz F von 13 GHz wird hierzu im Schaltungsmodul M ein Frequenzvervielfacher 17 mit einem Vervielfachungsfaktor von m = 6 und im Schaltungsmodul N ein Frequenzvervielfacher 19 mit einem Vervielfachungsfaktor von n = 2 verwendet.

Die auf diese Weise erzeugten unterschiedlichen Mikrowellensignale S_{M}, S_{N} werden in dem jeweiligen Schaltungsmodul M, N parallel der jeweiligen Sende- Empfangsweiche 21 und einem ersten Eingang des jeweiligen Mischers 23 zugeführt. Die Sende- Empfangsweichen 21 speisen die Antenne 15 mit dem jeweiligen Mikrowellensignal S_{M} bzw. S_{N}. Die Antenne 15 sendet die Mikrowellensignale S_{M}, S_{N} in den Behälter 1 in Richtung des Füllguts 3 und empfängt deren im Behälter 1 in Richtung der Antenne 15 zurück reflektierten Echosignale E_{M}, E_{N}.

Die von der Antenne 15 aufgenommenen Echosignale E_{M}, E_{N} werden dann wiederum den einzelnen Sende- Empfangsweichen 21 der Schaltungsmodule M, N zugeführt und von dieser einem zweiten Eingang des jeweiligen Mischers 23 zugeführt. Die Augenblicksfrequenz des am zweiten Eingang des Mischers 23 anliegenden Echosignals E_{M}, bzw. E_{N} weist gegenüber der Augenblicksfrequenz, die das parallel dazu am ersten Eingang des Mischers 23 anliegenden Mikrowellensignals S_{M} bzw. S_{N} zum Zeitpunkt des Empfangs hat, eine Frequenzdifferenz Δfₘ, Δfₙ auf, die von der Laufzeit abhängt, die die Mikrowellen für den Weg von der Sende- und Empfangseinrichtung 5 in den Behälter 1 und zurück benötigen. Die Frequenzdifferenzen Δfₘ, Δfₙ zwischen dem jeweiligen Mikrowellensignal S_{M} bzw. S_{N} und dem zugehörigen Echosignal E_{M} bzw. E_{N}, die durch Mischung derselben und Auswertung des Fourierspektrums des Mischsignals H_{M}, H_{N} gewonnen werden, entsprechen somit dem Abstand der reflektierenden Fläche von der Sende- und Empfangseinrichtung 5. Ferner entsprechen die Amplituden A(Δfₘ); A(Δfₙ) der Spektrallinien des durch Fouriertransformation gewonnenen Frequenzspektrums den Echoamplituden.

Der Mischer 23 erzeugt durch Multiplikation des jeweils an dessen ersten Eingang anliegenden Mikrowellensignal S_{M} S_{N} und dem zugehörigen am zweiten Eingang anliegenden Echosignal E_{M} bzw. E_{N} das Mischsignal H_{M}, H_{N}, dessen Frequenzen den Summen und den Differenzen der Frequenzen des jeweiligen Mikrowellensignals S_{M}, S_{N} und des zugehörigen Echosignal E_{M} bzw. E_{N} entsprechen. Dem Mischer 23 ist jeweils ein Filter 25 nachgeschaltet, das aus dem jeweiligen Mischsignal H_{M}, H_{N} den Anteil herausfiltert, dessen Frequenzen den Differenzen Δfₘ, Δfₙ der Frequenzen des jeweiligen Mikrowellensignals S_{M}, S_{N} und des zugehörigen Echosignal E_{M} bzw. E_{N} entsprechen, und das dieses als Messsignal M_{M}, M_{N} zur Verfügung stellt. Die einzelnen Messsignale M_{M}, M_{N} werden einem dem jeweiligen Filter 25 nachgeschalteten Analog-DigitalWandler A/D zugeführt, der das jeweilige Messsignal M_{M}, M_{N} digitalisiert und in digitaler Form der Signalverarbeitung 7 zuführt.

Erfindungsgemäß ist nur eine einzige Signalverarbeitung 7 vorgesehen, der die beiden Messsignale M_{M}, M_{N} getrennt voneinander zugeführt werden, und die die beiden Messsignale M_{M}, M_{N} getrennt voneinander auswertet. Vorzugsweise wird für jedes Messsignal M_{M}, M_{N} eine Echofunktion abgeleitet, die die Amplitude A(Δfₘ), A(Δfₙ) der Fouriertransformierten des Messsignals als Funktion einer von der zugehörigen Signallaufzeit abhängigen Größe, wie z.B. der Frequenzdifferenz Δfₘ, bzw. Δfₙ wiedergibt. Die Frequenzdifferenz Δf entspricht der Laufzeit und somit dem Abstand der reflektierenden Fläche von der Sende- und Empfangseinrichtung 5. Diese drei Größen sind Äquivalent und können anhand der im Ausgangssignal S verwendeten Frequenzmodulation, der Vervielfachungsfaktoren m, n, der Ausbreitungsgeschwindigkeit der Mikrowellen und der Einbauhöhe der Antenne 15 über dem Behälter 1 ineinander umgerechnet werden. Ferner entsprechen die Amplituden der Echofunktionen A(Δfₘ), A(Δfₙ) den zugehörigen Echoamplituden.

Die unterschiedlichen Mikrowellensignale S_{M}, S_{N} können zeitgleich oder zeitlich versetzt zueinander in den Behälter 1 gesendet werden. Zum zeitgleichen Senden der verschiedenen Mikrowellensignale S_{M}, S_{N} wird das Ausgangssignal S wie oben beschrieben zeitgleich parallel den einzelnen Schaltungsmodulen M, N zugeführt, die parallel zueinander die Mikrowellensignale S_{M}, S_{N} generieren, die dann zeitgleich der Antenne 15 zugeführt und von dieser gesendet werden.

Das zeitlich versetzte Senden der verschiedenen Mikrowellensignale S_{M}, S_{N} erfolgt beispielsweise über entsprechend angesteuerte, in die einzelnen zwischen dem Mikrowellengenerator 9 und der Antenne 15 bestehenden Signalpfade eingesetzte, Tore 27. Fig. 1 zeigt eine Variante, bei der vor jedem Schaltungsmodul M, N ein Tor 27 eingesetzt ist. Während das jeweilige Tor 27 geöffnet ist, liegt das Ausgangssignal S an dem entsprechenden Schaltungsmodul M, N an, das hieraus das jeweilige Sendesignal S_{M}, S_{N} generiert, das dann unmittelbar über die Antenne 15 gesendet wird. Ist das Tor 27 geschlossen, so ist der zugehörige Signalpfad unterbrochen. Das jeweilige Schaltungsmodul M, N generiert während dessen kein Mikrowellensignal S_{M}, S_{N}. Entsprechend sendet die Antenne 15 zu jedem Zeitpunkt immer nur die Mikrowellensignale S_{M}, S_{N} der hinter einem geöffneten Tor 27 liegenden Schaltungsmodule M, N.

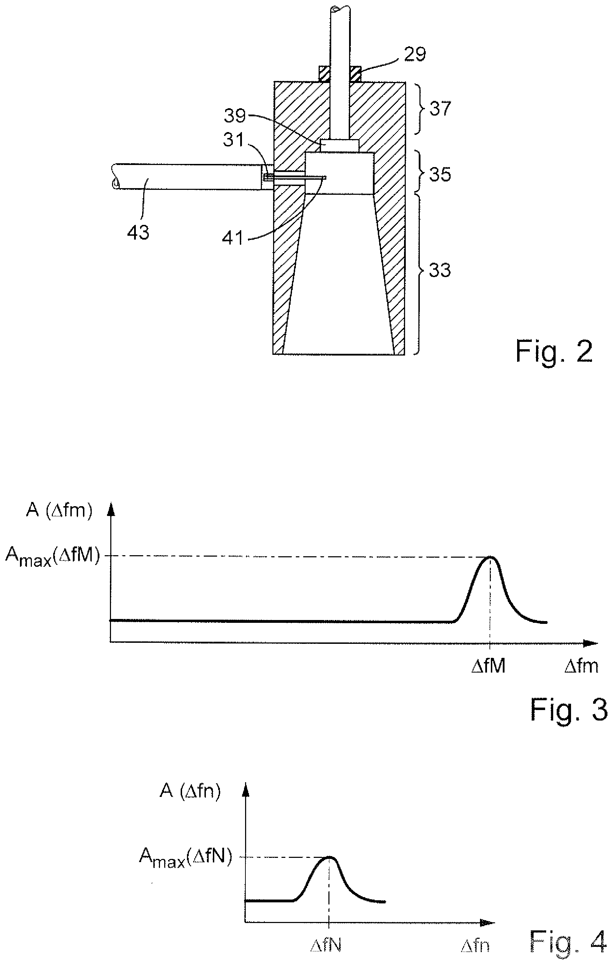

Beide Mikrowellensignale S_{M}, S_{N} werden über die Antenne 15 gesendet. Fig. 2 zeigt die Antenne 15 im Detail. Erfindungsgemäß weist die Antenne 15 einen Hohlleiteranschluss 29 und einen Koaxialleiteranschluss 31 auf. Über den Hohlleiteranschluss 29 wird die Antenne 15 mit dem höherfrequenteren Mikrowellensignal S_{M} gespeist, und das zugehörige höherfrequentere Echosignal E_{M} empfangen. Die Antenne 15 ist hierzu über den Hohlleiteranschluss 29 mit der Sende-Empfangsweiche 21 des Schaltungsmoduls M verbunden. Über den Koaxialleiteranschluss 31 wird die Antenne 15 mit dem niederfrequenteren Mikrowellensignal S_{N} gespeist und das zugehörige niederfrequentere Echosignal E_{N} empfangen. Die Antenne 15 ist hierzu über den Koaxialleiteranschluss 31 mit der Sende-Empfangsweiche 21 des Schaltungsmoduls N verbunden.

Die in Fig. 2 im Detail dargestellte Antenne 15 ist eine Hornantenne mit einem innen trichterförmigen sich in Senderichtung aufweitenden Horn 33 und zwei daran anschließenden Hohlleitersegmenten 35, 37. Die Hohlleitersegmente 35, 37 und das Horn 33 sind koaxial zueinander entlang einer Längsachse der Antenne 15 hintereinander angeordnet.

Das unmittelbar an das Horn 33 angrenzende Hohlleitersegment 35 ist hohlzylindrisch und weist einen Innendurchmesser auf, der vorzugsweise gleich dem Innendurchmesser des daran angrenzenden Endes des trichterförmigen Horns 33 ist. Das auf der vom Horn 33 abgewandten Seite dieses Hohlleitersegments 35 angeordnete zweite Hohlleitersegment 37 weist demgegenüber einen geringeren Innendurchmesser auf. Vorzugsweise sind die beiden Hohlleitersegmente 35, 37 über ein Übergangssegment 39 miteinander verbunden, dessen Innendurchmesser größer als der Innendurchmesser des daran auf der vom Horn 33 abgewandten Seite angrenzenden Hohlleitersegmente 37 und kleiner als der daran auf der vom Horn 33 zugewandten Seite angrenzenden Hohlleitersegments 35 ist. Das Übergangselement 39 dient der Impedanzanpassung am Übergang zwischen den beiden Hohlleitersegmenten 35, 37 und bewirkt dadurch eine Reduzierung der aufgrund des Impedanzunterschiedes der beiden Hohlleitersegmente 35, 37 auftretende Verlustleistung.

Die genaue Dimensionierung der Hohlleitersegmente 35, 37 und des Übergangselements 39 erfolgt beispielsweise durch eine dreidimensionale Feldsimulationsrechnung. Dabei werden vorzugsweise die sich bei der Mittenfrequenz der jeweiligen Mikrowellensignale S_{M}, S_{N} ausbildenden Grundmodi H11 zugrunde gelegt, und die Sendeleistung der Antenne 15 für diese Grundmodi H11 maximiert.

Zur Reduzierung der Verlustleistung weist das Übergangselement 39 vorzugsweise einen Durchmesser auf, bei dem eine Feldwellenimpedanz des Übergangselements 39 für eine Grundmode des hochfrequenteren Mikrowellensignal S_{M} gleich einer Wurzel aus einem Produkt der Feldwellenimpedanzen der beiden Hohlleitersegmente 35, 37 für die Grundmoden des hochfrequenteren Mikrowellensignals S_{M} ist. Dabei werden die Impedanzen auch hier vorzugsweise anhand der bei der jeweiligen Mittenfrequenz der Mikrowellensignale S_{M}, S_{N} auftretenden Grundmodi bestimmt.

Vorzugsweise weist das Übergangselement 39 eine Länge auf, die in der Größenordnung von einem Viertel der Wellenlänge einer Grundmode des hochfrequenteren Mikrowellensignals S_{M} bei dessen Mittenfrequenz liegt.

Zusätzlich kann das Übergangselement 39 als Prozessdichtung dienen, indem es als dichte Durchführung, insb. als Glasdurchführung, ausgebildet wird.
Der Hohlleiteranschluss 29 mündet unmittelbar in dem Hohlleitersegment 37, das einen Durchmesser aufweist, der an die im höherfrequenteren Mikrowellensignal S_{M} enthaltenen Frequenzen fₘ angepasst ist. Diese Anpassung erfolgt auch hier vorzugsweise anhand einer Grundmode des hochfrequenteren Mikrowellensignals S_{M} bei deren Mittenfrequenz. Vorzugsweise weist das Hohlleitersegment 37 eine Cut_{off} Frequenz auf, die größer als die im niederfrequenteren Mirkowellensignal S_{N} enthaltenen Frequenzen fₙ ist, Hierdurch wird bewirkt, dass das niederfrequentere Mikrowellensignal S_{N} und dessen entsprechend ebenfalls niederfrequenteres Echosignal E_{N} in diesem Hohlleitersegment 37 nicht ausbreitungsfähig sind. Das Hohlleitersegment 37 wirkt damit wie ein Filter, über das auch beim zeitgleichen Senden der beiden Mikrowellensignale S_{M}, S_{N} sichergestellt ist, dass ausschließlich das hochfrequentere Echosignal E_{M} über den Hohlleiteranschluss 29 dem zugehörigen Schaltungsmodul M zugeführt wird.

Der Koaxialleiteranschluss 31 ist an das unmittelbar an das Horn 33 angrenzende Hohlleitersegment 35 angeschlossen und weist eine seitlich in das Hohleitersegment 35 eingeführte stabförmige Einkopplung 41 auf, die senkrecht zur Längsachse des Hohlleitersegments 35 verläuft. Vorzugsweise wird die Einkopplung 41 derart ausgerichtet, dass sie senkrecht zur Polarisation des elektrischen Feldes der bei der Mittenfrequenz des hochfrequenteren Mikrowellensignals S_{M} genutzten Grundmode des hochfrequenteren Mikrowellensignals S_{M} verläuft. Hierdurch wird die durch die Einkopplung 41 bewirkte Störung der Ausbreitung des hochfrequenteren Mikrowellensignals S_{M} minimiert.

Um eine verlustarme Einkopplung des niederfrequenteren Mikrowellensignals S_{N} zu bewirkten, weist die Einkopplung 41 vorzugsweise ein Länge auf, die in der Größenordnung von einem Viertel der Wellenlänge des niederfrequenteren Mikrowellensignals S_{N} bei dessen Mittenfrequenz im freien Raum liegt. Die Einbauhöhe der Einkopplung 41 in das Hohlleitersegement 35 wird vorzugsweise derart gewählt, dass ein Abstand zwischen der Einkopplung 41 und dem Übergang zwischen den beiden Hohlleitersegmenten 35, 37 entlang der gemeinsamen Längsachse der Hohlleitersegmente 35, 37 in der Größenordnung von einem Viertel der Wellenlänge einer Grundmode des niederfrequenteren Mikrowellensignals S_{N} bei dessen Mittenfrequenz ist. Damit befindet sich das Maximum des in einer Grundmode ausgebildeten elektromagnetischen Feldes im Bereich der Einkopplung 41 und das Minimum im Bereich des Übergangs zwischen den beiden Hohlleitersegmenten 35, 37.

Das Hohlleitersegment 35 weist einen Durchmesser auf, der an die im niederfrequenteren Mikrowellensignal S_{N} enthaltenen Frequenzen fₙ angepasst ist. Da die Frequenzen fₘ des höherfrequenteren Mikrowellensignal S_{M} und dessen Echosignals E_{M} Vielfache dieser Frequenzen fₙ sind, sind in diesem Hohlleitersegment 35 beide Mikrowellensignale S_{M}, S_{N} und deren Echosignale E_{M}, E_{N} ausbreitungsfähig.

Beim zeitgleichen Senden beider Mikrowellensignale S_{M}, S_{N} können daher grundsätzlich beide zugehörigen Echosignale E_{M}, E_{N} über den Koaxialleiteranschluss 31 aufgenommen werden. Um dem Schaltungsmodul N ausschließlich das niederfrequentere Echosignal E_{N} zuzuführen könnte zwischen den Koaxialleiteranschluss 31 und das Schaltungsmodul N ein entsprechendes hier nicht dargestelltes Filter eingesetzt werden. Dies ist aber bei einer für den Fachmann selbstverständlichen frequenzabhängigen Auswahl der ohnehin im Schaltungsmodul N vorhandenen Bauteile nicht erforderlich. Sind sowohl die Sende- und Empfangsweiche 21 als auch der zugehörige Mischer 23 für die niedrigeren Frequenzen fₙ ausgelegt, so sind die höheren Frequenzen fₘ des in diesem Signalzweig unerwünschten hochfrequenteren Echosignals E_{M} in diesem Signalzweig ohnehin nicht ausbreitungsfähig, so dass das resultierende Mischsignal H_{N} und das daraus abgeleitete Messsignal M_{N} keinerlei auf das hochfrequentere Echosignal E_{M} zurückzuführende Anteile aufweisen.

Der Signalverarbeitung 7 stehen damit zwei unabhängig voneinander mit unterschiedlichen Frequenzen fₘ, fₙ aufgenommene Messsignale M_{N}; M_{M} zur Verfügung, anhand derer der Füllstand bestimmt wird.

Das Füllstandsmessgerät eignet sich, wie jedes andere Füllstandsrnessgerät auch, zur klassischen Füllstandsmessung eines homogenen Füllguts 3, wie es in Fig. 1 dargestellt ist. Dabei wird aus jedem der Messsignale M_{M}, M_{N} auf die oben beschriebene Weise die zugehörige Echofunktion A(Δfₘ), A(Δfₙ) abgeleitet. Fig. 3 zeigt ein Beispiel der in dieser Messsituation mit dem hochfrequenteren Mikrowellensignal S_{M} abgeleiteten Echofunktion A(Δfₘ) und Fig. 4 die mit dem niederfrequenteren Mikrowellensignal S_{N} abgeleitete Echofunktion A(Δfₙ). Unter der Annahme, dass das Maximum der jeweiligen Echofunktion Aₘₐₓ(Δf_{M}), Aₘₐₓ(Δf_{N}) auf eine Reflektion des zugehörigen Mikrowellensignal S_{M} bzw. S_{N} an der Füllgutoberfläche zurück zu führen ist, wird anhand der jeweiligen Frequenzdifferenz Δf_{M}, Δf_{N}, bei der das Maximum der jeweiligen Echofunktion Aₘₐₓ(Δf_{M}), Aₘₐₓ(Δf_{N}) vorliegt, der Füllstand bestimmt. Dabei entspricht die am Maximum vorliegende Frequenzdifferenz Δf_{M}, Δf_{N} der Signallaufzeit zur Füllgutoberfläche und zurück und damit dem Abstand der Füllgutoberfläche von der Sende- und Empfangseinrichtung 5, aus dem dann anhand der Einbauhöhe der Antenne 15 der Füllstand berechnet wird.

Da hier zwei Messergebnisse vorliegen, kann wie bei anderen redundanten Systemen auch, durch einen Vergleich der beiden bei den unterschiedlichen Frequenzen fₘ, fₙ gemessenen Füllstände eine Plausibilitätsprüfung ausgeführt werden. Erfindungsgemäß wird anhand der Lage der beiden Maxima geprüft, ob die beiden an dem jeweiligen Maximum vorliegende Frequenzdifferenzen Δf_{M}, Δf_{N} der gleichen Signallaufzeit und damit dem gleichen Abstand der reflektierenden Oberfläche im Behälter 1 von der Antenne 15 entsprechen. Ist dies der Fall, so folgt daraus, dass die beiden Mikrowellensignale S_{M}, S_{N} an der gleichen Füllgutoberfläche im Behälter 1 reflektiert wurden. Die Messhypothese des homogenen Füllguts 3 wird hierdurch bestätigt.

Die Amplitude Aₘₐₓ eines durch die Reflektion an der Füllgutoberfläche bedingten Maximums Aₘₐₓ(Δf_{M}), Aₘₐₓ(Δf_{N}) der zugehörigen Echofunktion A(Δfₘ), A(Δfₙ) hängt maßgeblich vom Reflektionskoeffizienten des Füllguts 3 ab. Der Reflektionskoeffizient ist füllgut-spezifisch und frequenzabhängig. Je größer der Reflektionskoeffiizient ist, umso größer ist die Amplitude Aₘₐₓ des Maximums und umso genauer ist die Lage des Maximums und damit der Füllstand bestimmbar. Ergibt die obige Überprüfung der Lage der Maxima, dass sie auf eine Reflektion an ein und derselben Füllgutoberfläche zurückzuführen sind, wird der Füllstand vorzugsweise anhand desjenigen Maximums bestimmt, das die größere Amplitude - in dem dargestellten Beispiel Aₘₐₓ(Δf_{M}) - aufweist.

Dieses Verfahren ist besonders vorteilhaft in Anwendungen einsetzbar, bei denen sich im Behälter 1 unbekannte Füllgüter 3 befinden, oder beispielsweise im Rahmen eines im Behälter 1 ablaufenden Produktionsprozesses nacheinander unterschiedliche Füllgüter 3 im Behälter 1 sein können. Dabei wird anhand der beiden Echofunktionen A(Δfₘ), A(Δfₙ) die Lage der Maxima überprüft, festgestellt, welche der beiden Echofunktionen A(Δfₘ), A(Δfₙ) das die größere Amplitude Aₘₐₓ aufweisende auf die Reflektion an der Füllgutoberfläche zurück zu führende Maximum aufweist, und der Füllstand anhand dieser Echofunktion A(Δfₘ), A(Δfₙ) bestimmt. Dieses Verfahren kann durch entsprechende in der Signalverarbeitung 7 implementierte Software vollautomatisch ausgeführt werden. Damit erkennt das Füllstandsmessgerät selbsttätig, bei welcher der beiden Frequenzen fₘ, fₙ das momentan im Behälter 1 befindliche Füllgut 3 den höheren Reflektionskoeffizienten aufweist. Damit ist auch bei wechselnden Füllgütern 3 eine zuverlässige und genaue Füllstandsmessung möglich.

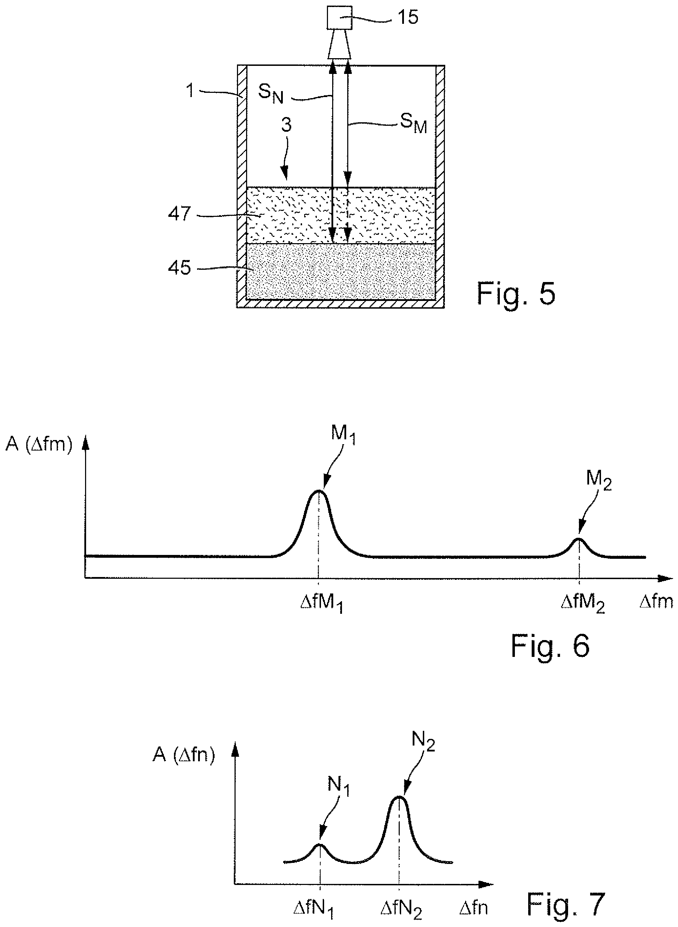

Ein weiteres Anwendungsgebiet, in dem das erfindungsgemäße Füllstandsmessgerät besonders vorteilhaft einsetzbar ist, sind Füllgüter 3 die zur Schichtbildung neigen. Mit Schichtbildung ist gemeint, dass sich im Behälter 1 eine untere Füllgutschicht 45 ausbildet, auf der sich eine weitere Füllgutschicht 47 mit geringerer Dichte ablagert. Diese Messsituation ist in Fig. 5 dargestellt.

Ein typisches Beispiel hierfür ist eine auf einer flüssigen Füllgutschicht ausgebildete Schaumschicht. Daneben gibt es eine Vielzahl von Anwendungen, bei denen das Füllgut 3 zwei Medien mit unterschiedlicher Dichte enthält. Auch hier lagert sich dasjenige Medium, das das geringere spezifische Gewicht aufweist, in einer oberen Füllgutschicht 47 auf dem Medium mit dem höheren spezifischen Gewicht ab. Es bilden sich zwei voneinander völlig getrennte Schichten aus. Die Grenze zwischen den beiden Füllgutschichten 45, 47 wird als Trennschicht bezeichnet. Trennschichten treten beispielsweise in der Petrochemie auf, wo sie z.B. durch Wasser und Kohlenwasserstoffe, z.B. Öl, gebildet werden. Ein weiteres Beispiel ist die Lebensmittelindustrie, wo sich Trennschichten beispielsweise in Fettabscheidern ausbilden.

Dabei wird die physikalische Tatsache ausgenutzt, dass die Frequenzabhängigkeit der Transmissions- und der Reflektionseigenschaften von Materialien von deren Dichte abhängt. Diese Abhängigkeit führt dazu, dass der Reflektionskoeffizient der oberen die geringere Dichte aufweisenden Füllgutschicht 47 für die niederfrequenteren Mikrowellensignale S_{N} deutlich geringer ist als der der Reflektionskoeffizient derselben Füllgutschicht 45 für die hochfrequenteren Mikrowellensignale S_{M}. Entsprechend durchdringt ein wesentlicher Anteil der niederfrequenten Mikrowellensignale S_{N} die obere Füllgutschicht 47 und wird erst an der Oberfläche der darunter befindlichen Füllgutschicht 45 reflektiert.

Demgegenüber durchdringt nur ein sehr geringer Anteil des hochfrequenteren Mikrowellensignals S_{M} die obere Füllgutschicht 47, der dann an der Oberfläche des darunter befindlichen Füllgutschicht 45 reflektiert wird. Der überwiegende Anteil des hochfrequenteren Mikrowellensignals S_{M} wird bereits an der Oberfläche der oberen Füllgutschicht 47 reflektiert.

Fig. 6 zeigt ein Beispiel einer in der in Fig. 5 dargestellten Messsituation mit dem höherfrequenteren Mikrowellensignal S_{M} abgeleitete Echofunktion A(Δfₘ).
Sie weist ein deutlich ausgeprägtes auf die Reflektion an der Oberfläche der oberen Füllgutschicht 47 zurück zu führendes erstes Maximum M1 und ein nachfolgendes auf die Reflektion an der unteren Füllgutschicht 45 zurück zu führendes sehr viel schwächeres zweites Maximum M2 auf.

Fig. 7 zeigt ein Beispiel einer in der in Fig. 5 dargestellten Messsituation mit dem niederfrequenteren Mikrowellensignal S_{N} abgeleitete Echofunktion A(Δfₙ).
Sie weist ein schwaches auf die Reflektion an der oberen Füllgutschicht 47 zurück zu führendes erstes Maximum N1 und ein nachfolgendes auf die Reflektion an der unteren Füllgutschicht 45 zurück zu führendes eine deutliche größere Amplitude Aₘₐₓ (Δf_{N2}) aufweisendes zweites Maximum N2 auf.

Je nach Material und Dichte der beiden Füllgutschichten 45, 47 kann es im Extremfall sogar sein, dass das jeweils schwächere Maximum M2, N1 der beiden Echofunktionen A(Δfₘ), A(Δfₙ) sogar gar nicht mehr erkennbar ist.

Erfindungsgemäß wird vorzugsweise jeweils das absolute Maximum der beiden Echofunktionen Aₘₐₓ(Δf_{M1}), Aₘₐₓ(Δf_{N2}) ermittelt, und die zugehörige Frequenzdifferenz Δf_{M1}, Δf_{N2} bestimmt. Befindet sich im Behälter 1 nur eine Füllgutoberfläche eines ansonsten homogenen Füllguts 3 an der sowohl das niederfrequente als auch das hochfrequentere Mikrowellensignal S_{M}, S_{N} reflektiert werden, so stimmen die Frequenzdifferenzen der absoluten Maxima der beiden Echofunktionen A(Δfₘ), A(Δfₙ) bis auf einen durch das Verhältnis der beiden verschiedenen Vervielfachungsfaktoren m, n gegebenen Faktor überein. In dem Fall liegt die in Fig. 1, 3 und 4 dargestellte Messsituation vor, und der Füllstand dieses Füllguts 3 wird vorzugsweise anhand der Frequenzdifferenz Δf_{M}, Δf_{N} desjenigen Maximums bestimmt, das die größere Amplitude - hier Aₘₐₓ(Δf_{M}) - aufweist.

Stimmen die Frequenzdifferenzen Δf_{M1}, Δf_{N2} der absoluten Maxima M1, N2 der beiden Echofunktionen A(Δfₘ), A(Δfₙ) nicht bis auf einen durch das Verhältnis der beiden verschiedenen Vervielfachungsfaktoren m, n gegebenen Faktor überein, liegt im Behälter 1 der in Fig. 5 dargestellte Fall vor. Folglich entspricht das absolute Maximum M1 der mit dem hochfrequenteren Mikrowelfensignal S_{M} aufgenommenen Echofunktion A(Δfₘ) einer Reflektion an der oberen Füllgutschicht 47 und das absolute Maximum der mit dem niederfrequenteren Mikrowellensignal S_{N} aufgenommenen Echofunktion A(Δfₙ) einer Reflektion an der unteren Füllgutschicht 45.

In diesem Fall wird anhand der Frequenzdifferenz Δf_{M1} des Maximums M1 der mit dem hochfrequenteren Mikrowellensignal S_{M} aufgenommenen Echofunktion A(Δfₘ) die Lage der Oberfläche der oberen Füllgutschicht 47 bestimmt. Ist die Ausbreitungsgeschwindigkeit der Mikrowellen in der oberen Füllgutschicht 47 bekannt, so wird zusätzlich anhand der Frequenzdifferenz Δf_{N2} des absoluten Maximums N2 der mit dem niederfrequenteren Mikrowellensignal S_{N} aufgenommenen Echofunktion A(Δfₙ) und der zuvor ermittelten Lage der Oberfläche der oberen Füllgutschicht 47 die Lage der Oberfläche der unteren Füllgutschicht 45 bestimmt. Diese Ausbreitungsgeschwindigkeit ist in der Regel bekannt, wenn im sich Behälter 1 ein zwei Medien enthaltendes Füllgut 3 befindet. Hier weiß der Anwender, welches Medium die obere Füllgutschicht 47 bildet und kann die zugehörige Ausbreitungsgeschwindigkeit vorab messen oder nachlesen.

ist die Ausbreitungsgeschwindigkeit von Mikrowellen in der oberen Füllgutschicht 47 nicht bekannt, so kann anhand der Frequenzdifferenz Δf_{N2} des absoluten Maximums N2 der mit dem niederfrequenteren Mikrowellensignal S_{N} aufgenommenen Echofunktion A(Δfₙ) und der zuvor ermittelten Lage der Oberfläche der oberen Füllgutschicht 47 ein Näherungswert für die Lage der Oberfläche der unteren Füllgutschicht 45 bestimmt werden, indem für die unbekannte Ausbreitungsgeschwindigkeit ein Schätzwert angesetzt wird. So kann die Lage der Oberfläche der unteren Füllgutschicht 45 bei Schaumbildung beispielsweise unter der Annahme bestimmt werden, dass die Ausbreitungsgeschwindigkeit der Mikrowellen in der oberen Füllgutschicht 47 näherungsweise gleich der bekannten Ausbreitungsgeschwindigkeit in Luft ist.

In den bisher beschriebenen Anwendungen wurde die Antenne 15 jeweils unmittelbar als Sender und Empfänger eingesetzt. Es ist aber natürlich auch möglich die Antenne 15 als Bestandteil einer Linsen- oder einer Reflektorantenne einzusetzen.

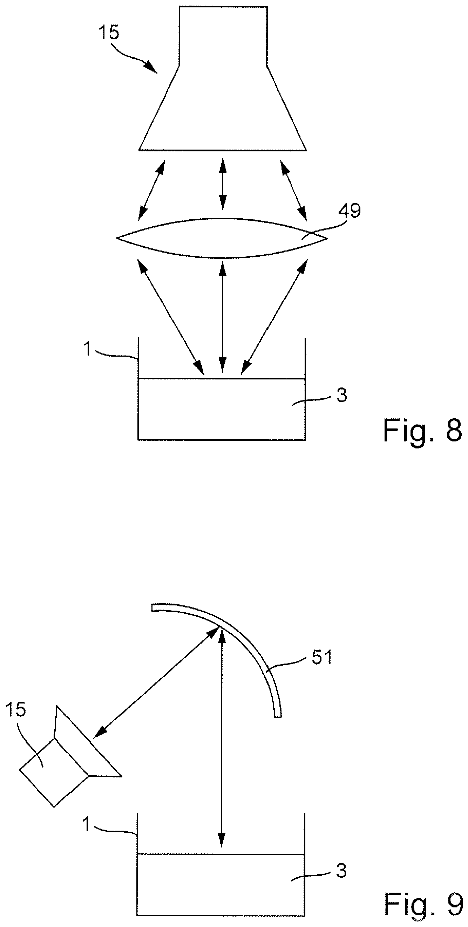

Im ersten Fall wird im Nahbereich der Antenne 15 eine Linse 49 in den Strahlengang eingesetzt. Dies ist in Fig. 8 dargestellt. Die Linse 49 kann z.B. dazu dienen, durch eine entsprechende frequenzabhängige Bündelung der darauf auftreffenden Mikrowellensignale S_{M}, S_{N} die Öffnungswinkel unter denen die entsprechenden Mikrowellensignale S_{M}, S_{N} gesendet werden einzustellen. Der Öffnungswinkel, unter dem die Mikrowellensignale S_{M}, S_{N} über die Antenne 15 gesendet werden ist frequenzabhängig. Er ist umso größer, je kleiner das Verhältnis der Apertur der Antenne 15 zur Wellenlänge der Mikrowellen ist. Anstelle einer einzelnen Linse 49 können hier natürlich auch aufwendigere aus mehreren Linsen zusammen gesetzte Linsensysteme eingesetzt werden.

Durch eine entsprechende Linsenwahl ist es beispielsweise möglich, die einzelnen Öffnungswinkel aneinander anzugleichen, so dass beide Mikrowellensignale S_{M}, S_{N} unter dem gleichen Öffnungswinkel in den Behälter 1 gesendet werden.

Im zweiten Fall ist in den Strahlengang der Antenne 15 ein Reflektor 51 eingesetzt, der die von der auf den Reflektor 51 ausgerichteten Antenne 15 gesendeten Mikrowellensignale S_{M}, S_{N} in eine gewünschte Richtung ausrichtet bzw. umlenkt, und deren Echosignale E_{M}, E_{N} zur Antenne 15 zurück reflektiert. Dieser Fall ist in Fig. 9 dargestellt.

### Bezugszeichenliste:

- 1: Behälter
- 3: Füllgut
- 5: Sende- und Empfangseinrichtung
- 7: Signalverarbeitung
- 9: Mikrowellengenerator
- 11: FMCW Rampengenerator
- 13: Filter
- 15: Antenne
- 17: Frequenzvervielfacher
- 19: Frequenzvervielfacher
- 21: Sende- Empfangsweiche
- 23: Mischer
- 25: Filter
- 27: Tor
- 29: Hohlleiteranschluss
- 31: Koaxialleiteranschluss
- 33: Horn
- 35: Hohlleitersegment
- 37: Hohlleitersegment
- 39: Übergangselement
- 41: Einkopplung
- 43: Koaxialleiter
- 45: obere Fülfgutschicht
- 47: untere Füllgutschicht
- 49: Linse
- 51: Reflektor

## Patentansprüche

1. Mit Mikrowellen nach dem Laufzeitprinzip arbeitendes Füllstandsmessgerät zur Messung eines Füllstandes eines Füllgutes (3) in einem Behälter (1), mit
- einer Sende- und Empfangseinrichtung (5),
-- zur Erzeugung von einem hochfrequenteren Mikrowellensignal (S_{M}) und einem deutlich niedrigere Frequenzen (fₙ) aufweisenden niederfrequenteren Mikrowellensignal (S_{N}),
-- zum gleichzeitigen oder zum sukzessiven Senden dieser Mikrowellensignale (S_{M}, S_{N}) in den Behälter (1) in Richtung des Füllguts (3), und
-- zum Empfangen von im Behälter (1) zur Sende- und Empfangseinrichtung (5) zurück reflektierten Echosignalen (E_{M}, E_{N}) der Mikrowellensignale (S_{M}, S_{N}),
-- die eine einzige Antenne (15) aufweist,
--- die ein innen trichterförmiges Horn (33) und zwei miteinander verbundene an das Horn (33) angeschlossene Hohlleitersegmente (35, 37) aufweist,
--- die einen Koaxialleiteranschluss (31) aufweist, der an das unmittelbar an das Horn (33) angrenzende Hohlleitersegment (35) angeschlossenen ist, über den die Antenne (15) mit dem niederfrequenteren Mikrowellensignal (S_{N}) gespeist wird, und über den das zugehörige niederfrequentere Echosignal (E_{N}) empfangen wird, und
-- die einen Hohlleiteranschluss (29) aufweist, der an dasjenige der beiden Hohlleitersegmente (37) angeschlossen ist, das auf einer vom Horn (33) abgewandten Seite des an das Horn (33) angrenzenden Hohlleitersegments (35) angeordneten ist, und über den die Antenne (15) mit dem höherfrequenteren Mikrowellensignal (S_{M}) gespeist wird, und über den das zugehörige höherfrequentere Echosignal (E_{M}) empfangen wird.
--- wobei das Hohlleitersegment (35) einen Durchmesser aufweist, der an die im niederfrequenteren Mikrowellensignal (S_{N}) enthaltenen Frequenzen (fₙ) und an die Frequenzen (fₘ) des höherfrequenteren Mikrowellensignal (S_{M}), die ein Vielfaches dieser Frequenzen (fₙ) sind, angepasst ist, wodurch in diesem Hohlleitersegment (35) beide Mikrowellensignale (S_{M}, S_{N}) und beide Echosignale (E_{M}, E_{N}) ausbreitungsfähig, wodurch bei zeitgleichem Senden beider Mikrowellensignale (S_{M}, S_{N}) der Empfang der beide zugehörigen Echosignale (E_{M}, E_{N}) über den Koaxialleiteranschluss (31) vorgesehen ist.

2. Füllstandsmessgerät nach Anspruch 1, bei dem
- das mit dem Hohlleiteranschluss (29) versehene Hohlleitersegment (37) einen Durchmesser aufweist, der an die im höherfrequenteren Mikrowellensignal (S_{M}) enthaltenen Frequenzen (fₘ) angepasst ist.

3. Füllstandsmessgerät nach Anspruch 1, bei dem
- der Koaxialleiteranschluss (31) eine in das Hohlleitersegment (35) hinein ragende Einkopplung (41) aufweist,
- ein Abstand zwischen der Einkopplung (41) und einem Übergang zwischen den beiden Hohlleitersegmenten (35, 37) entlang einer gemeinsamen Längsachse der beiden Hohlleitersegemente (35, 37) in der Größenordnung von einem Viertel der Wellenlänge einer Grundmode des niederfrequenteren Mikrowellensignals (S_{N}) bei dessen Mittenfrequenz liegt, und
- die Einkopplung (41) eine Länge aufweist, die in der Größenordnung von einem Viertel der Wellenlänge einer Grundmode des niederfrequenteren Mikrowellensignals (S_{N}) bei dessen Mittenfrequenz im freien Raum liegt.

4. Füllstandsmessgerät nach Anspruch 1, bei dem
zwischen den beiden Hohlleitersegmenten (35, 37) ein Übergangselement (39) angeordnet ist.

5. Füllstandsmessgerät nach Anspruch 4, bei dem
das Übergangselement (39) einen Durchmesser aufweist, bei dem eine Feldwellenimpedanz des Übergangselements (39) für das hochfrequentere Mikrowellensignal (S_{M}) gleich einer Wurzel aus einem Produkt der Feldwellenimpedanzen der beiden Hohlleitersegmente (35, 37) für die Grundmoden des hochfrequenteren Mikrowellensignals (S_{M}) ist.

6. Füllstandsmessgerät nach Anspruch 4, bei dem
das Übergangselement (39) eine Länge aufweist, die in der Größenordnung von einem Viertel der Wellenlänge einer Grundmode des hochfrequenteren Mikrowellensignals (S_{M}) bei dessen Mittenfrequenz liegt.

7. Füllstandsmessgerät nach Anspruch 1, bei dem
der Koaxialleiteranschluss (31) eine in das Hohlleitersegment (35) hinein ragende Einkopplung (41) aufweist, die senkrecht zu einer Polarisation einer Grundmode des hochfrequenteren Mikrowellensignale (S_{M}) verläuft.

8. Füllstandsmessgerät nach Anspruch 4, bei dem
das Übergangselement (39) als Durchführung, insb. als Glasdurchführung, ausgebildet ist.

9. Füllstandsmessgerät nach Anspruch 1, bei dem
das mit dem Hohlleiteranschluss (29) versehene Hohlleitersegment (37) eine Cut_{off} Frequenz aufweist, die größer als die im niederfrequenteren Mikrowellensignal (S_{N}) enthaltenen Frequenzen (fₙ) ist.

10. Füllstandsmessgerät nach Anspruch 1, das
- einen einzigen Mikrowellengenerator (9) aufweist, der ein Ausgangssignal (S) erzeugt, aus dem die beiden Mikrowellensignale (S_{M}, S_{N}) in separaten dem Mikrowellengenerator (9) nachgeschalteten Schaltungsmodulen (M, N) erzeugt und der Antenne (15) zugeführt werden, und
- eine einzige Signalverarbeitung (7) aufweist,
-- der ein anhand des hochfrequenteren Echosignals (E_{M}) abgeleitetes erstes Messsignal (M_{M}) und ein anhand des niederfrequenteren Echosignals (E_{N}) abgeleitetes zweites Messsignal (M_{N}) getrennt zugeführt werden, und
-- die anhand der beiden Messsignale (M_{M}, M_{N}) den Füllstand bestimmt.

11. Füllstandsmessgerät nach Anspruch 10, bei dem
- jedes Schaltungsmodul (M, N) einen Frequenzvervielfacher (17, 19), eine Sende- Empfangsweiche (21) und einen Mischer (23) aufweist,
- jeder Frequenzvervielfacher (17, 19) an den Mikrowellengenerator (9) angeschlossen ist, und dazu dient aus dem Ausgangssignal (S) des Mikrowellengenerators (9) durch Frequenzvervielfachung um einen ganzzahligen modul-spezifischen Vervielfachungsfaktor (m, n) das jeweilige Mikrowellensignal (S_{M}, S_{N}) zu erzeugen,
- jeder Frequenzvervielfacher (17, 19) über die Sende-Empfangsweiche (21) an die Antenne (15) und parallel dazu an einen ersten Eingang des jeweiligen Mischers (23) angeschlossen ist,
- die Antenne (15) über die jeweilige Sende- und Empfangsweiche (21) an einen zweiten Eingang des jeweiligen Mischers (23) angeschlossen ist, und
- jedem der Mischer (23) ein Filter (25) nachgeschaltet ist, das dazu dient aus einem durch Mischung des am ersten Eingang des jeweiligen Mischers (23) anliegenden Mikrowellensignals (S_{M}, S_{N}) und dem am zweiten Eingang des jeweiligen Mischers (23) anliegenden Echosignals (E_{M}, E_{N}) erzeugten Mischsignal (H_{M}, H_{N}) ein Messsignal (M_{M}, M_{N}) herauszufiltern, dessen Frequenzen (Δfₘ, Δfₙ) den Differenzen der Frequenzen des jeweiligen Mikrowellensignals (S_{M}, S_{N}) und des zugehörigen Echosignals (E_{M}, E_{N}) entsprechen.

12. Füllstandsmessgerät nach Anspruch 1, bei dem
in den Strahlengang der Antenne (15) mindestens eine Linse (49) oder ein Reflektor (51) eingesetzt ist.

13. Verfahren zur Messung eines Füllstandes eines homogenen Füllguts (3) in einem Behälter (1) mit einem Füllstandsmessgerät gemäß einem der Ansprüche 1 bis 12, bei dem
- anhand des hochfrequenteren und des niederfrequenteren Echosignals (E_{M}, E_{N}) jeweils eine Echofunktion (A(Δfₘ), A(Δfₙ)) abgleitet wird, die die jeweilige Echoamplitude (A) als Funktion einer von der zugehörigen Signallaufzeit (t) abhängigen Größe wiedergibt,
- für jede Echofunktion (A(Δfₘ); A(Δfₙ)) ein auf eine Reflektion an der Füllgutoberfläche zurück zu führendes Maximum der jeweiligen Echofunktion (A(Δfₘ), A(Δfₙ)) bestimmt wird,
- anhand der Lage der beiden Maxima überprüft wird, ob die beiden Maxima auf eine Reflektion an derselben Füllgutoberfläche zurück zu führen sind, und
- der Füllstand anhand der Lage des Maximums derjenigen Echofunktion (A(Δfₘ)) bestimmt wird, dass die größere Amplitude (Aₘₐₓ(Δf_{M})) aufweist, wenn die beiden Maxima auf eine Reflektion an derselben Füllgutoberfläche zurück zu führen sind.

14. Verfahren zur Messung eines Füllstands eines zur Schichtbildung
neigenden Füllguts (3) in einem Behälter (1) mit einem Füllstandsmessgerät gemäß einem der Ansprüche 1 bis 12, bei dem
- anhand des hochfrequenteren und des niederfrequenteren Echosignals (E_{M}, E_{N}) jeweils eine Echofunktion (A(Δfₘ), A(Δfₙ)) abgleitet wird, die die jeweilige Echoamplitude als Funktion einer von der zugehörigen Signallaufzeit abhängigen Größe wiedergibt,
- ein auf eine Reflektion an einer Füllgutoberfläche zurück zu führendes absolutes Maximum (M₁, N₂) jeder Echofunktion (A(Δfₘ), A(Δfₙ)) bestimmt wird,
- anhand der Lage der beiden absoluten Maxima (M₁, N₂)
festgestellt wird, ob sie auf eine Reflektion der beiden Mikrowellensignale (S_{M}, S_{N}) an ein und derselben Füllgutoberfläche im Behälter (1) zurückzuführen sind, oder ob das absolute Maximum (M₁) der mit dem hochfrequenteren Mikrowellensignal (S_{M}) abgeleiteten
Echofunktion (A(Δfₘ)) auf eine Reflektion an einer Füllgutoberfläche einer oberen eine geringere Dichte aufweisenden Füllgutschicht (47) zurückzuführen ist, und das absolute Maximum (N₂) der mit dem niederfrequenteren Mikrowellensignal (S_{N})
abgeleiteten Echofunktion (A(Δfₙ) auf eine Reflektion an einer Füllgutoberfläche einer unteren eine größere Dichte aufweisenden Füllgutschicht (45) zurückzuführen ist.

15. Verfahren nach Anspruch 14, bei dem
- der Füllstand anhand der Lage des die größere Amplitude (Aₘₐₓ(Δf_{M})) aufweisenden Maximums bestimmt wird, wenn anhand der Lage der beiden absoluten Maxima festgestellt wurde, dass die beiden absoluten Maxima auf eine Reflektion der beiden Mikrowellensignale (S_{M},
S_{N}) an ein und derselben Füllgutoberfläche im Behälter (1) zurückzuführen sind, und
- die Lage der Füllgutoberfläche der oberen Füllgutschicht (47) anhand der Lage des absoluten Maximums (M₁) der mit dem hochfrequenteren Mikrowellensignal (S_{M}) abgeleiteten Echofunktion (A(Δfₘ)) bestimmt wird, wenn festgestellt wurde, dass das absolute Maximum (M₁) der mit dem hochfrequenteren Mikrowellensignal (S_{M}) abgeleiteten Echofunktion (A(Δfₘ)) auf eine Reflektion an einer Füllgutoberfläche der oberen Füllgutschicht (47) zurückzuführen ist.

## Claims

1. Level transmitter, which operates with microwaves based on the time-of-flight principle, and designed to measure a level of a product (3) in a container (1), with
- a transmission and reception unit (5),
-- designed for generating a higher-frequency microwave signal (S_{M}) and a lower-frequency microwave signal (S_{N}) with far lower frequencies (fₙ),
-- designed for the simultaneous or gradual transmission of these microwave signals (S_{M}, S_{N}) into the container (1) in the direction of the product (3), and
-- designed to receive echo signals (E_{M}, E_{N}) of the microwave signals (S_{M}, S_{N}) reflected in the container (1) back to the transmission and reception unit (5),
-- said unit having a single antenna (15),
--- which has a funnel-shaped horn (33) on the inside and two interconnected waveguide segments (35, 37) connected to the horn (33),
--- which has a coaxial conductor connection (31), which is connected to the waveguide segment (35) that is directly adjacent to the horn (33), via which the antenna (15) is supplied with the lower-frequency microwave signal (S_{N}), and via which the associated lower-frequency echo signal (E_{N}) is received, and
-- which has a waveguide connection (29), which is connected to the one of the two waveguide segments (37) which is arranged on a side of the waveguide segment (35) that is adjacent to the horn (33), said side facing away from the horn (33), and via which the antenna (15) is supplied with the higher-frequency microwave signal (S_{M}), and via which the associated higher-frequency echo signal (E_{M}) is received,
--- wherein the waveguide segment (35) has a diameter which is adapted to the frequencies (fₙ) contained in the lower-frequency microwave signal (S_{N}) and to the frequencies (fₘ) of the higher-frequency microwave signal (S_{M}), which are a multiple of these frequencies (fₙ), as a result of which both microwave signals (S_{M}, S_{N}) and both echo signals (E_{M}, Eₙ) can propagate in this waveguide segment (35), as a result of which when the two microwave signals (S_{M}, S_{N}) are transmitted simultaneously the reception of the two corresponding echo signals (E_{M}, Eₙ) is provided for via the coaxial conductor connection (31).

2. Level transmitter as claimed in Claim 1, wherein
- the waveguide segment (37) equipped with the waveguide connection (29) has a diameter which is adapted to the frequencies (fₘ) contained in the higher-frequency microwave signal (S_{M}).

3. Level transmitter as claimed in Claim 1, wherein
- the coaxial conductor connection (31) has a coupling element (41) that projects into the waveguide segment (35),
- a distance between the coupling element (41) and a transition between the two waveguide segments (35, 37) along a common longitudinal axis of the two waveguide segments (35, 37) is in the region of a quarter of the wavelength of a fundamental mode of the lower-frequency microwave signal (S_{N}), at its center frequency, and
- the coupling element (41) has a length that is in the region of a quarter of the wavelength of a fundamental mode of the lower-frequency microwave signal (S_{N}) at its center frequency in free space.

4. Level transmitter as claimed in Claim 1, wherein a transition element (39) is arranged between the two waveguide segments (35, 37).

5. Level transmitter as claimed in Claim 4, wherein the transition element (39) has a diameter where a field wave impedance of the transition element (39) for the higher-frequency microwave signal (S_{M}) is equal to a root of a product of the field wave impedances of the two waveguide segments (35, 37) for the fundamental modes of the higher-frequency microwave signal (S_{M}).

6. Level transmitter as claimed in Claim 4, wherein
the transition element (39) has a length that is in the region of a quarter of the wavelength of a fundamental mode of the higher-frequency microwave signal (S_{M}) at its center frequency.

7. Level transmitter as claimed in Claim 1, wherein
the coaxial conductor connection (31) has a coupling element (41) that projects into the waveguide segment (35) and is perpendicular to a polarization of a fundamental mode of the higher-frequency signal (S_{M}).

8. Level transmitter as claimed in Claim 4, wherein
the transition element (39) is designed as a feedthrough, particularly a glass feedthrough.

9. Level transmitter as claimed in Claim 1, wherein
the waveguide segment (37) equipped with the waveguide connection (29) has a Cut_{off} frequency that is greater than the frequencies (fₙ) contained in the lower-frequency microwave signal (S_{N}).

10. Level transmitter as claimed in Claim 1, which
- has a single microwave generator (9) that generates an output signal (S) from which the two microwave signals (S_{M}, S_{N}) are generated in separate circuit modules (M, N) located downstream from the microwave generator (9) and are supplied to the antenna (15), and
- has a single signal processing unit (7),
-- to which a first measuring signal (M_{M}), derived using the higher-frequency echo signal (E_{M}), and a second measuring signal (M_{N}), derived using the lower-frequency echo signal (E_{N}), are supplied separately
-- which determines the level on the basis of the two measuring signals (M_{M}, M_{N}).

11. Level transmitter as claimed in Claim 10, wherein
- each circuit module (M, N) has a frequency multiplier (17, 19), a transmission/reception switch (21) and a mixer (23),
- each frequency multiplier (17, 19) is connected to the microwave generator (9) and is used to generate the respective microwave signal (S_{M}, S_{N}) from the output signal (S) of the microwave generator (9) by frequency multiplication by a module-specific whole-numbered multiplication factor (m, n),
- each frequency multiplier (17, 19) is connected via the transmission/reception switch (21) to the antenna (15) and in parallel to a first input of the respective mixer (23),
- the antenna (15) is connected to a second input of the respective mixer (23) via the respective transmission/reception switch (21), and
- a filter (25) is located downstream from each of the mixers (23), said filter serving to filter out a measuring signal (M_{M}, M_{N}) from a mixed signal (H_{M}, H_{N}) generated by mixing the microwave signal (S_{M}, S_{N}) present at the first input of the respective mixer (23) and the echo signal (E_{M}, E_{N}) present at the second input of the respective mixer (23), wherein the frequencies (Δfₘ, Δfₙ) of said measuring signal correspond to the differences of the frequencies of the respective microwave signal (S_{M}, S_{N}) and the corresponding echo signal (E_{M}, E_{N}).

12. Level transmitter as claimed in Claim 1, wherein
at least one lens (49) or one reflector (51) is inserted into the beam path of the antenna (15).

13. Procedure designed for measuring a level of a homogeneous product (3) in a container (1) using a level transmitter as claimed in one of the claims 1 to 12, wherein
- an echo function (A(Δfₘ), A(Δfₙ)) is derived in each case using the higher-frequency and lower-frequency echo signal (E_{M}, E_{N}) that reflects the echo amplitude (A) as a function of a variable that depends on the associated signal propagation time (t),
- for each of the echo functions (A(Δfₘ), A(Δfₙ)), a maximum of the particular echo function (A(Δfₘ), A(Δfₙ)) is determined, said maximum resulting from a reflection at the surface of the product,
- the position of the maximum values is used to verify whether the two maximum values are the result of a reflection at the same product surface, and
- the level is determined using the position of the maximum value of the particular echo function (A(Δfₘ) that has the higher amplitude (Aₘₐₓ(Δf_{M}) if the two maximum values are the result of a reflection at the same product surface.

14. Procedure designed for measuring a level of a product (3) that tends to form layers in a container (1) using a level transmitter as claimed in one of the claims 1 to 12, wherein
- an echo function (A(Δfₘ), A(Δfₙ)) is derived in each case using the higher-frequency and lower-frequency echo signal (E_{M}, E_{N}) that reflects the echo amplitude as a function of a variable that depends on the associated signal propagation time,
- an absolute maximum (M₁, N₂) of each echo function (A(Δfₘ), A(Δfₙ)) is determined, resulting from a reflection at a product surface,
- the position of the two absolute maximum values (M₁, N₂) is used to determine whether they are the result of a reflection of the two microwave signals (S_{M}, S_{N}) at one and the same product surface in the container (1), or whether the absolute maximum (M₁) of the echo function (A(Δfₘ) derived with the higher-frequency microwave signal (S_{M}) is the result of a reflection at a product surface of an upper product layer (47) that has a lower density, and the absolute maximum (N₂) of the echo function (A(Δfₙ) derived with the lower-frequency microwave signal (S_{N}) is the result of a reflection at a product surface of a lower product layer (45) that has a higher density.

15. Procedure as claimed in Claim 14, wherein
- the level is determined using the position of the maximum value with the higher amplitude (Aₘₐₓ(Δf_{M})) if it was found, on the basis of the position of the two absolute maximum values, that the two absolute maximum values are the result of a reflection of the two microwave signals (S_{M}, S_{N}) at one and the same product surface in the container (1), and
- the position of the product surface of the upper product layer (47) is determined using the position of the absolute maximum (M₁) of the echo function (A(Δfₘ) derived with the higher-frequency microwave signal (S_{M}) if it was found that the absolute maximum (M₁) of the echo function (A(Δfₘ)) derived with the higher-frequency microwave signal (S_{M}) is the result of a reflection at a product surface of the upper product layer (47).

## Revendications

1. Transmetteur de niveau fonctionnant avec des micro-ondes d'après le principe du temps de propagation, destiné à la mesure d'un niveau d'un produit (3) dans un réservoir (1), avec
- une unité d'émission et de réception (5),
-- destinée à la génération d'un signal à micro-ondes de fréquence supérieure (S_{M}) et d'un signal à micro-ondes de fréquence inférieure (S_{N}) présentant des fréquences (fₙ) nettement inférieures,
-- destinée à l'émission simultanée ou successive de ces signaux à micro-ondes (S_{M}, S_{N}) dans le réservoir (1) en direction du produit (3), et
-- destiné à la réception de signaux d'écho (E_{M}, E_{N}) des signaux à micro-ondes (S_{M}, S_{N}), réfléchis dans le réservoir (1) vers l'unité d'émission et de réception (5),
-- laquelle unité comporte une unique antenne (15),
--- qui présente un cornet intérieur (33) en forme d'entonnoir et deux segments de guide d'ondes (35, 37) reliés entre eux et raccordés au cornet (33),
--- qui présente une connexion de câble coaxial (31), qui est raccordée au segment de guide d'ondes (35) immédiatement adjacent au cornet (33), par l'intermédiaire de laquelle l'antenne (15) est alimentée avec le signal à micro-ondes de fréquence inférieure (S_{N}), et par l'intermédiaire de laquelle le signal d'écho de fréquence inférieure (E_{N}) correspondant est reçu, et
-- qui présente une connexion de guide d'ondes (29), qui est raccordée à celui des deux segments de guide d'ondes (37) disposé sur le côté opposé au cornet (33) du segment de guide d'ondes (35) adjacent au cornet (33), et par l'intermédiaire de laquelle l'antenne (15) est alimentée avec le signal à micro-ondes de fréquence supérieure (S_{M}), et par l'intermédiaire de laquelle le signal d'écho de fréquence supérieure (E_{M}) correspondant est reçu,
--- le segment de guide d'ondes (35) présentant un diamètre adapté aux fréquences (fₙ) contenues dans le signal à micro-ondes de fréquence inférieure (S_{N}) et aux fréquences (fₘ) contenues dans le signal à micro-ondes de fréquence supérieure (S_{M}), qui représentent un multiple de ces fréquences (fₙ), ce par quoi les deux signaux à micro-ondes (S_{M}, S_{N}) et les deux signaux d'écho (E_{M}, En) peuvent se propager dans ce segment de guide d'ondes (35), ce par quoi la réception des deux signaux d'écho (E_{M}, En) correspondants est prévue par l'intermédiaire de la connexion de câble coaxial (31) en cas d'émission simultanée des deux signaux à micro-ondes (S_{M}, S_{N}).

2. Transmetteur de niveau selon la revendication 1, pour lequel
- le segment de guide d'ondes (37) muni de la connexion de guide d'ondes (29) présente un diamètre adapté aux fréquences (fₘ) contenues dans le signal à micro-ondes de fréquence supérieure (S_{M}).

3. Transmetteur de niveau selon la revendication 1, pour lequel
- la connexion de câble coaxial (31) comporte un élément d'injection (41) s'étendant dans le segment de guide d'ondes (35),
- une distance entre l'élément d'injection (41) et une transition entre les deux segments de guide d'ondes (35, 37) le long d'un axe longitudinal commun des deux segments de guide d'ondes (35, 37) se situe dans l'ordre de grandeur d'un quart de la longueur d'onde d'un mode fondamental du signal à micro-ondes de fréquence inférieure (S_{N}), au niveau de sa fréquence centrale, et
- l'élément d'injection (41) présente une longueur, qui se situe dans l'ordre de grandeur d'un quart de la longueur d'onde d'un mode fondamental du signal à micro-ondes de fréquence inférieure (S_{N}), dans la plage libre au niveau de sa fréquence centrale.

4. Transmetteur de niveau selon la revendication 1, pour lequel est disposé un élément de transition (39) entre les deux segments de guide d'ondes (35, 37).

5. Transmetteur de niveau selon la revendication 4, pour lequel l'élément de transition (39) présente un diamètre pour lequel une impédance ondulatoire de champ de l'élément de transition (39) pour le signal à micro-ondes de fréquence supérieure (S_{M}) est égale à une racine d'un produit des impédances ondulatoires de champ des deux segments de guide d'ondes (35, 37) pour les modes fondamentaux du signal à micro-ondes de fréquence supérieure (S_{M}).

6. Transmetteur de niveau selon la revendication 4, pour lequel l'élément de transition (39) présente une longueur qui se situe dans l'ordre de grandeur d'un quart de la longueur d'onde d'un mode fondamental du signal à micro-ondes de fréquence supérieure (S_{M}), au niveau de sa fréquence centrale.

7. Transmetteur de niveau selon la revendication 1, pour lequel la connexion de câble coaxial (31) comporte un élément d'injection (41) s'étendant dans le segment de guide d'ondes (35), qui est perpendiculaire à une polarisation d'un mode fondamental du signal à micro-ondes de fréquence supérieure (S_{M}).

8. Transmetteur de niveau selon la revendication 4, pour lequel l'élément de transition (39) est conçu en tant que traversée, notamment en tant que traversée en verre.

9. Transmetteur de niveau selon la revendication 1, pour lequel le segment de guide d'ondes (37) muni de la connexion de guide d'ondes (29) présente une fréquence Cut_{off}, qui est supérieure aux fréquences (fₙ) contenues dans le signal à micro-ondes de fréquence inférieure (S_{N}).

10. Transmetteur de niveau selon la revendication 1, lequel
- comporte un unique générateur de micro-ondes (9), qui génère un signal de sortie (S) à partir duquel les deux signaux à micro-ondes (S_{M}, S_{N}) sont générés dans des modules de couplage (M, N) disposés en aval du générateur de micro-ondes (9) et acheminés à l'antenne (15), et
- comporte une unique unité de traitement de signal (7),
-- à laquelle sont acheminés séparément un premier signal de mesure (M_{M}) dérivé au moyen du signal d'écho de fréquence supérieure (E_{M}) et un deuxième signal de mesure (M_{N}) dérivé au moyen du signal d'écho de fréquence inférieure (EN), et
-- qui détermine le niveau sur la base des deux signaux de mesure (M_{M}, M_{N}).

11. Transmetteur de niveau selon la revendication 10, pour lequel
- chacun des modules de couplage (M, N) comprend un multiplicateur de fréquence (17, 19), un commutateur d'émission / de réception (21) et un mélangeur (23),
- chacun des multiplicateurs de fréquence (17, 19) est raccordé au générateur de micro-ondes (9) et sert à générer le signal à micro-ondes (S_{M}, S_{N}) respectif à partir du signal de sortie (S) du générateur de micro-ondes (9) par multiplication de fréquence d'un facteur de multiplication (m, n) entier, spécifique au module,
- chacun des multiplicateurs de fréquence (17, 19) est raccordé par l'intermédiaire du commutateur d'émission / de réception (21) à l'antenne (15) et en parallèle à une première entrée du mélangeur (23) correspondant,
- l'antenne (15) est raccordé par l'intermédiaire du commutateur d'émission / de réception (21) à une deuxième entrée du mélangeur (23) correspondant, et
- est disposé en aval de chacun des mélangeurs (23) un filtre (25) servant à filtrer un signal de mesure (M_{M}, M_{N}) à partir d'un signal de mélange (H_{M}, H_{N}) généré par un mélange du signal à micro-ondes (S_{M}, S_{N}) présent sur la première entrée du mélangeur (23) correspondant et du signal d'écho (E_{M}, E_{N}) présent sur la deuxième entrée du mélangeur (23) correspondant, signal de mesure dont les fréquences (Δfₘ, Δfₙ) correspondent aux différences des fréquences du signal à micro-ondes (S_{M}, S_{N}) respectif et du signal d'écho (E_{M}, E_{N}) correspondant.

12. Transmetteur de niveau selon la revendication 1, pour lequel
au moins une lentille (49) ou un réflecteur (51) est insérée dans la trajectoire du faisceau de l'antenne (15).

13. Procédé destiné à la mesure d'un niveau d'un produit (3) homogène dans un réservoir (1) à l'aide d'un transmetteur de niveau selon l'une des revendications 1 à 12, pour lequel
- est dérivée, au moyen du signal d'écho (E_{M}, E_{N}) de fréquence supérieure et de fréquence inférieure respectivement une fonction d'écho (A(Δfₘ), A(Δfₙ)), qui reflète l'amplitude d'écho (A) respective en tant que fonction d'une grandeur dépendant du temps de propagation de signal (t) correspondant,
- est déterminé, pour chacune des fonctions d'écho (A(Δfₘ), A(Δfₙ)), un maximum de la fonction d'écho (A(Δfₘ), A(Δfₙ)) respective, résultant de la réflexion sur la surface du produit,
- on vérifie, sur la base de la position des deux maximum, si les deux maximum résultent d'une réflexion sur la même surface du produit, et
- le niveau est déterminé sur la base de la position du maximum de la fonction d'écho (A(Δfₘ) présentant la plus grande amplitude (Aₘₐₓ(Δf_{M}) lorsque les deux maximum résultent d'une réflexion sur la même surface du produit.

14. Procédé destiné à la mesure d'un niveau d'un produit (3) ayant tendance à se former en couches dans un réservoir (1) à l'aide d'un transmetteur de niveau selon l'une des revendications 1 à 12, pour lequel
- est dérivée, au moyen du signal d'écho (E_{M}, E_{N}) de fréquence supérieure et de fréquence inférieure respectivement une fonction d'écho (A(Δfₘ), A(Δfₙ)), qui reflète l'amplitude d'écho respective en tant que fonction d'une grandeur dépendant du temps de propagation de signal correspondant,
- est déterminé un maximum absolu (M₁, N₂) de chaque fonction d'écho (A(Δfₘ), A(Δfₙ)), résultant d'une réflexion sur une surface du produit,
- on détermine, sur la base des deux maximum absolus (M₁, N₂), s'ils résultent d'une réflexion des deux signaux à micro-ondes (S_{M}, S_{N}) sur une même surface du produit dans le réservoir (1), ou si le maximum absolu (M₁) de la fonction d'écho (A(Δfₘ) dérivée avec le signal à micro-ondes de fréquence supérieure (S_{M}) résulte d'une réflexion sur une surface du produit d'une couche de produit supérieure (47) présentant une densité inférieure, et si le maximum absolu (N₂) de la fonction d'écho (A(Δfₙ) dérivée avec le signal à micro-ondes de fréquence inférieure (S_{N}) résulte d'une réflexion sur une surface du produit d'une couche de produit inférieure (45) présentant une densité supérieure.

15. Procédé selon la revendication 14, pour lequel
- le niveau est déterminé au moyen de la position du maximum présentant la plus grande amplitude (Aₘₐₓ(Δf_{M})) lorsqu'on a constaté, au moyen de la position des deux maximum absolus, que les deux maximum absolus résultent d'une réflexion des deux signaux à micro-ondes (S_{M}, S_{N}) sur une même surface du produit dans le réservoir (1), et
- la position de la surface de la couche de produit supérieure (47) est déterminée au moyen de la position du maximum absolu (M₁) de la fonction d'écho (A(Δfₘ) dérivée avec le signal à micro-ondes de fréquence supérieure (S_{M}), lorsqu'on a constaté que le maximum absolu (M₁) de la fonction d'écho (A(Δfₘ) dérivée avec le signal à micro-ondes de fréquence supérieure (S_{M}) résulte d'une réflexion sur une surface de la couche de produit supérieure (47).
